# EUROPEAN PATENT APPLICATION

(11) **EP 1 234 850 A1**
(43) Date of publication of application: **28.08.2002**
(21) Application number: 01310039.1
(22) Date of filing: 30.11.2001
(51) Int. Cl.: C08J 9/14, B29C 44/34, C08L 75/04

(54) **Low pressure mixing of polyurethane foam**

(30) Priority: 21.02.2001 US 789989
(71) Applicant: Atofina Chemicals, Inc., Philadelphia, PA 19103-3222 (US)
(72) Inventor: Wheeler, Ian A., Pottstown, Pennsylvania 19464 (US); Wickwire, Dean, Glenmore, Pennsylvania 19343 (US)
(74) Representative: Stoner, Gerard Patrick

(57) **Abstract**

Preparation of water-blown polyurethane foam using a gaseous co-blowing agent is provided wherein the A-side and B-side are mixed at low pressures.

## Description

### BACKGROUND OF THE INVENTION

This invention relates to the processing of water-blown polyurethane foams using a gaseous blowing agent such as 1,1,1,2-tetrafluoroethane ("134a") as a co-blowing agent, especially to improvements resulting from mixing of the A-side and B-side at low pressure.

Until now, the leading blowing agent for use in making water-blown polyurethane foams has been 1,1-dichloro-1-fluoroethane ("141b") in order to meet the market place requirements for energy, cost, and the like. Such hydrochlorofluorocarbons ("HCFCs") are now being phased out, however, due to their high ozone depletion potential ("ODP"). Thus, many foam manufacturers are now investigating hydrofluorocarbons ("HFCs") as replacement candidates. One such candidate is 1,1,1,3,3-pentafluoroethane ("245fa") which, despite its high cost, has been reported to provide thermal conductivity at 24°C. of 0.137 BTU-in/hrft²°F and a free rise density of 1.35 pounds per cubic foot ("pcf") when mixed by conventional techniques using impingement mixing of the A-side and B-side at a pressure of 2000 psig. While considerably cheaper, the use of the gaseous blowing agent 134a at an impingement mixing pressure of 2000 psig is found to provide thermal conductivity at 24°C. of 0.145 BTU-in/hrft²°F and a free rise density of 1.88 pcf. If used as insulation for appliances, foam made with 134a would therefore involve an energy penalty and require the use of considerably more foam formulation in order to obtain the same amount of foam. In order for 134a to be commercially viable for such applications, it would therefore be useful if a method could be found to substantial lower the thermal conductivity and free rise density of polyurethane foam made with such gaseous blowing agents.

### BRIEF SUMMARY OF THE INVENTION

In a method for preparing water-blown polyurethane foam with a gaseous blowing agent such as 134a wherein an A-side containing isocyanate is mixed with a B-side containing polyol, an improvement is provided in which such mixing is conducted at a pressure of no more than about 1300 psig. Either impingement or mechanical mixing may be employed.

### DETAILED DESCRIPTION

It was thought that in order to obtain results for the gaseous blowing agents which are comparable to those obtained with 245fa it would be necessary to increase the standard mixing pressure, typically about 1500-2500 psig, using impingement mixing wherein streams of the A-side and B-side impinge under high pressure. Instead, it has unexpectedly been found that reduction of the mixing pressure (to a maximum of about 1300 psig) leads to significantly improved (lowered) thermal conductivity and free rise density, while at the same time reducing the amount of frothing and improving the appearance of the foam in terms of fewer worm-holes (or blow holes) and less discoloration. "Worm holes" are long thin voids or overblown cells which are a cause of high thermal conductivity.

While the description to follow will primarily focus on the preferred gaseous blowing agent 134a, this invention can also be used to improve the quality of water-blown polyurethane foam using other gaseous blowing agents, e.g. HFC's and/or HCFC's, particularly a blend of chlorodifluoromethane ("22") and 1-chloro-1,1-difluoroethane ("142b") as the co-blowing agent. When using 134a, the molar ratio of 134a to the carbon dioxide generated by the water can range from about 25:75 to about 75:25, preferable from 25:75 to about 60:40 since blow holes become more apparent at 134a percentages above 60%. Water is conventionally used as a co-blowing agent since the resulting carbon dioxide improves flow. The 134a can make up from about 1 to about 25% by weight of the total foam formulation, more typically about 9-12 % for appliance foam and about 5-14 % for other applications. The gaseous blowing agent can be added to the A-side, to the B-side, or apportioned between the two sides. The water is a component of the B-side.

When processing polyurethane foam formulations, the industry typically uses impingement mixing at 1500-2500 psig. We have found that improvements in impingement mixing occur at pressures of no more than 1300 psig. Similar results are found with mechanical mixing, the maximum pressure typically being about 1000 psig. In mechanical mixing, mixing occurs downstream from where the A-side and B-side streams converge. In the examples to follow, conventional equipment from the ESCO company was used, a Bench Top Dispenser mixer for the mechanical mixing and a laboratory RIM mixer for the impingement mixing.

The other components of the polyurethane foam formulations can be those which are conventionally used. Thus, the B-side typically contains polyol, water, catalysts, surfactants and the like, while the A-side typically contains the isocyanate and a surfactant. The components of the B-side and the A-side, other than the 134a, are typically put into separate pressure vessels at room temperature, the vessels sealed, the 134a added, and the vessels stirred for about 45 minutes. Thereafter, the A-side and B-side are ready for pumping to the mixer.

The practice of the invention is illustrated in more detail in the following nonlimiting examples using low pressure mixing (both mechanical at 175 psig and impingement at 1300 psig) versus standard high pressure (2000 psig) impingement mixing, the equipment used being the conventional ESCO equipment described above. The gas blowing agent is 134a, which is present as a 60/40 mix with the carbon dioxide generated by the water. The formulation used in parts by weight is as follows, all components being commercially available: 19.7 parts Voranol 490 and 9.4 parts Voranol 391, two polyether polyols available from Dow Chemical; 3.3 parts XR 124, a polyether polyol available from Huntsman; 1.5 parts Terate 2541, a polyester polyol available from Kosa; 1 part L6900 silicone, a surfactant available from Witco; 0.2 part Polycat 5 and 0.4 part Polycat 41, amine catalysts available from Air Products; 1 part water; 8.6 parts 134a; and 55 parts methane diphenyl diisocyanate. ASTM procedures were employed to measure the thermal conductivity (ASTM C518) and free rise density (ASTM D2126) of the Comparative Example (at 2000 psig, impingement mixing) and two invention examples (Example A at 175 psig, mechanical mixing and Example B at 1300 psig, impingement mixing). The results are shown in Table I, with thermal conductivity at 24°C being given in BTU-in/hrft²°F and free rise density being given in pounds per cubic foot:

**TABLE I**

| | Thermal Conductivity: | Free Rise Density |
|---|---|---|
| Comparative Example at 2000 psig (impingement): | 0.145 | 1.88 |
| Example A at 175 psig (mechanical) | 0.140 | 1.65 |
| Example B at 1300 psig (impingement) | 0.141 | 1.45 |

It is thus clear that low pressure mixing provides dramatically improved results which more clearly mimic those obtained with the use of the more expensive alternative blowing agent, 245fa. Furthermore, the foams of Example A and B were relatively free of blow holes and discoloration which were readily apparent in the foam of the Comparative Example.

## Claims

1. A process for preparing water-blown polyurethane foam using a gaseous co-blowing agent in which an A-side containing isocyanate is mixed with a B-side containing polyol, **characterised by** conducting such mixing at a pressure of no more than about 1300 psig.

2. A process as in claim 1 wherein the gaseous blowing agent is 1,1,1,2-tetrafluoroethane.

3. A process as in claim 1 or 2 wherein the mixing involves the use of impingement mixing.

4. A process as in claim 1 or 2 wherein the mixing involves the use of mechanical mixing and the pressure is no more than about 1000 psig.
